# EUROPEAN PATENT APPLICATION

(11) **EP 3 591 453 A1**
(43) Date of publication of application: **08.01.2020**
(21) Application number: 19184516.3
(22) Date of filing: 04.07.2019
(51) Int. Cl.: G02B 7/10, F21S 41/63, F21V 7/00, F21V 13/04, F21V 14/06, G02B 19/00

(54) **ZOOM LAMP LENS GROUP**

(30) Priority: 04.07.2018 CN 201810727568
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: He, Zuping, Ningbo, 315103 (CN)
(74) Representative: 2K Patentanwälte Blasberg Kewitz & Reichel

(57) **Abstract**

The present invention relates to a zoom lamp lens group, the zoom lamp lens group includes a first lens with a fixed distance from the light source and capable of emitting all light rays of the light source, and a lens assembly located on a light exiting side of the first lens; the lens assembly includes at least one concave lens and at least one convex lens located between the first lens and the concave lens; the convex lens has the same radius and refractive index as the concave lens, and the convex surface of the convex lens is disposed opposite to the concave surface of the concave lens, and the distance between the convex lens and the concave lens is adjustable to obtain different illumination angles. By using this lens group, the light efficiency is improved and the irradiation effect is good.

## Description

### RELATED APPLICATION

This application claims priority to a Chinese Patent Application No. CN 201810727568.1, filed on July 4, 2018.

### FIELD OF THE TECHNOLOGY

The present invention relates to optical field, with particular emphasis on a zoom lamp lens group.

### BACKGROUND OF THE INVENTION

With the wide application of LED lamps, higher requirements have been put forward for LED lighting. Such as shopping malls, counters and other occasions, the lamps are required to have soft and flexible light to avoid glare and prevent visual pressure on customers. In street lighting, especially in smog weather, it is hoped that the light emitted by the lamps can be illuminated far enough and has sufficient penetrating power.

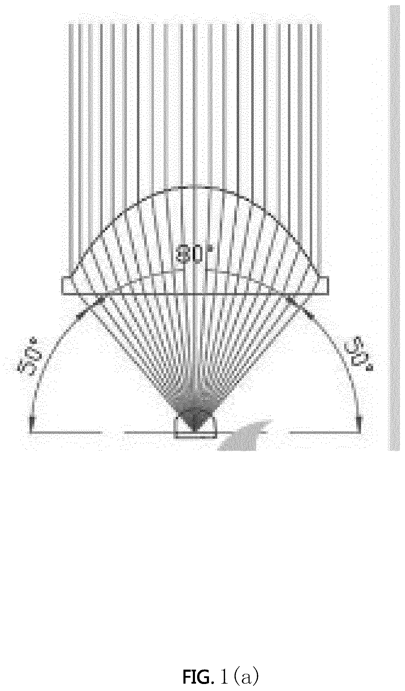

It is well known that one of the important factors affecting the light efficiency is the angle of the light emitting light. In order to meet different requirements of light efficiency, people try to perfect the lighting effect by designing different zoom lens and changing the angle of the light emitting light. At present, the existing zoom lens mainly has three types: single convex lens, zoom collimating lens, and multi-lens combination mode, as shown in FIG. 1(a)-1(c), respectively.

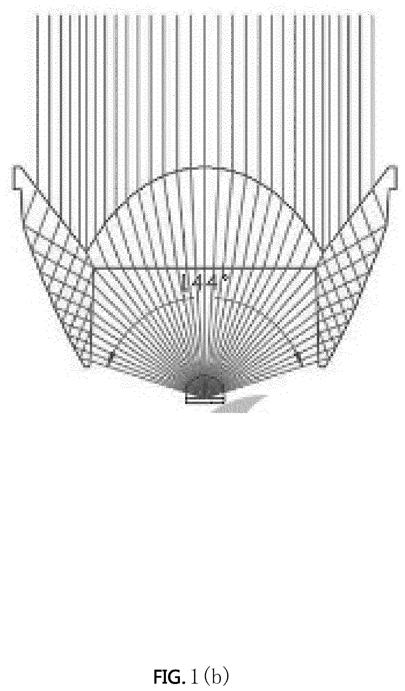

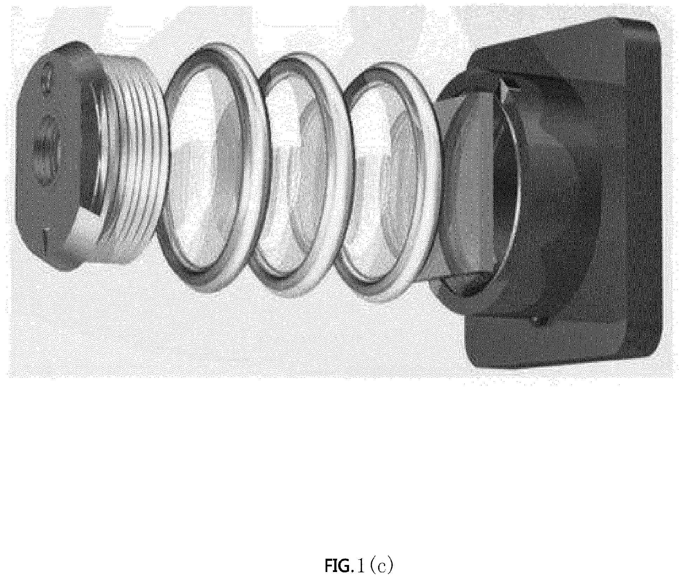

The single convex zoom lens shown in FIG. 1(a) mainly realizes the change of the light-emitting angle by adjusting the distance between the convex lens and the LED light source, and the light effect is relatively low; the zoom collimating lens shown in FIG. 1(b) mainly achieves a large angle of light demand by moving the convex lens close to the direction of the LED lamp, and achieves a small angle of light demand through the cooperation of the total reflection surface and the convex lens, the light distribution method has a variety of adjustment capabilities and the light effect is relatively high, however, in the process of focusing, it is easy to cause the light spot layering because the convex lens and total reflection surface are not consistent with the change of the light source; the multi-lens combination shown in FIG. 1(c) adjusts the light rays through a series of convex lens and concave lens. Although the light distribution method has a clear spot and a good illumination effect, the optical efficiency is low.

### BRIEF SUMMARY OF THE INVENTION

It is an object of the present invention to solve or at least partially alleviate the problems discussed above.

In particular, according to the first aspect of the present invention, a lens group of zoom lamp with high luminous efficiency and natural variation of the irradiated spot is provided. The zoom lamp lens group includes a first lens with a fixed distance from the light source and capable of emitting all light rays of the light source, and a lens assembly located on a light exiting side of the first lens;
the lens assembly includes at least one concave lens and at least one convex lens located between the first lens and the concave lens;
the convex lens has the same radius and refractive index as the concave lens, and the convex surface of the convex lens is disposed opposite to the concave surface of the concave lens, and the distance between the convex lens and the concave lens is adjustable to obtain different illumination angles.
advantageously, the first lens is a lens capable of collimating all the light rays emitted from the light source.
advantageously, the first lens is a total internal reflection lens.
advantageously, the first lens is a total internal reflection lens capable of collimating all of the light rays emitted from the light source.
advantageously, the total internal reflection lens includes a groove formed at a central portion of the light incident side of the total internal reflection lens for accommodating the light source, the groove having a side incident surface and a central incident surface,
a total internal reflection surface formed on the side surface and connected to the side incident surface,
and an exit surface formed on the opposite side of the light incident side and connected to the total internal reflection surface;
the curvatures of the total internal reflection surface and the exit surface and the incident surfaces meet the requirements that all the light rays of the light source are incident from the incident surface, reflected by the total internal reflection surface, and then emitted out through the exit surface in parallel.
advantageously, the total internal reflection lens is axisymmetric formed;
the central incident surface is a convex lens surface, the focal point of the convex lens surface is located in the groove, and the light source is located at the focal point;
the side incident surface and the total internal reflection surface meet the requirements that the light rays of the light source is incident from the side incident surface, and the reflected light reflected by the total internal reflection surface is horizontally emitted toward the exit surface, and the exit surface is a plane correspondingly.
advantageously, the total internal reflection lens is axisymmetric formed;
the central incident surface is a convex lens surface, the focal point of the convex lens surface coincides with an intersection formed by the intersection of the open end of the groove and the symmetry axis of the total internal reflection lens, and the light source is located at the focal point and the backlight surface of the light source and the open end of the groove is flush;
the side incident surface and the total internal reflection surface meet the requirements that the light rays of the light source is incident from the side incident surface, and the reflected light reflected by the total internal reflection surface is horizontally emitted toward the exit surface, and the exit surface is a plane correspondingly.
advantageously, the distance between the concave lens and the convex lens has the following choices: the concave surface and the convex surface coincide, the concave lens is located within the focal distance of the convex lens, the concave lens is located at the focal distance of the convex lens, and the concave lens is located outside the focal distance of the convex lens.
advantageously, the zoom lamp lens group can be applied in the lighting system to process the light from the light source in the lighting system.

Compared with the prior art, the invention has the advantages that the first lens of the zoom lamp lens group can emit all the light emitted by the light source, and the manner ensures the light source utilization, so that the optical efficiency is guaranteed, and at the same time the distance between the first lens and the light source is fixed, that is, the position of the first lens does not need to be moved when dimming is performed, and the adjustment of the illumination angle of the illumination system is realized only by changing the distance between the convex lens and the concave lens having the same refractive index and radius in the lens assembly. It overcomes the problem that the spot is layered due to the inconsistent relationship between the total reflection lens and the convex lens with respect to the light source, so that the spot is clear and the illumination effect is improved.

### BRIEF DESCRIPTION OF THE DRAWINGS

FIG. 1(a)-1(c) are schematic views showing the structure of three types of zoom lamp lenses of the prior art.
FIG. 2 is a schematic structural view of an embodiment corresponding to a zoom lamp lens group of the present invention.
FIG. 3(a) is a view showing the light-emitting effect corresponding to FIG. 2.
FIG. 3(b) is a view showing the light-emitting effect of the plano-concave lens of FIG. 2 after being displaced in the focal distance of the plano-convex lens.
FIG. 3(c) is a view showing the light-emitting effect of the plano-convex lens of FIG. 2 after being displaced at the focal distance of the plano-convex lens.
FIG. 3(d) is a view showing the light-emitting effect of the plano-convex lens of FIG. 2 after being displaced outside the focal distance of the plano-convex lens.

### DETAILED DESCRIPTION OF THE INVENTION

Embodiments of the invention are described in detail below, Examples of the embodiments are shown in the appended drawings in which consistently identical or similar labels represent identical or similar elements or elements having the same or similar function. The embodiments described below by reference to the drawings are exemplary and are only used for the interpretation of the invention and cannot be understood to be a limitation of the invention.

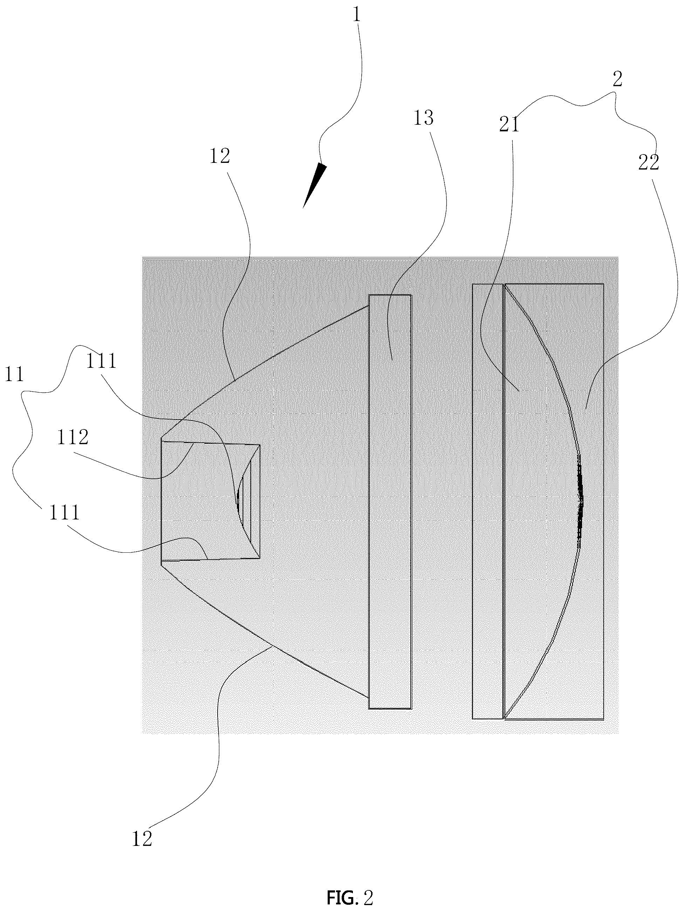

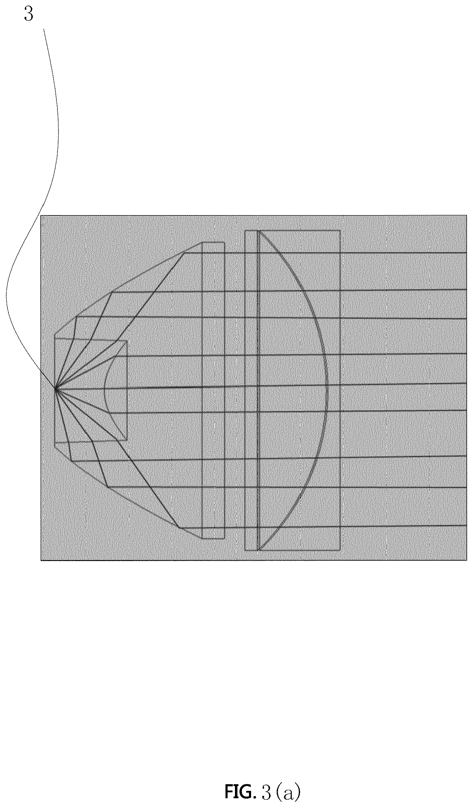

FIG. 2 and FIG. 3(a)-3(d) show the structure of an embodiment of the lens group of zoom lamp and corresponding lighting system in the present application. The lens group of zoom lamp in the present application includes a first lens capable of emitting all the light emitted by the light source, a lens assembly located on the light exiting side of the first lens and capable of obtaining different illumination angles by adjusting the spacing between the internal devices thereof, the distance between the first lens and the light source is not variable. The lens assembly is composed of at least one convex lens and at least one concave lens, and the radius and refractive index of the convex lens are the same as that of the concave lens. The convex lens is located between the first lens and the concave lens, and the convex surface of the convex lens is disposed opposite to the concave surface of the concave lens.

In the present application, the distance between the first lens and the light source is fixed. When the light is emitted through the first lens, the shooting angle and the shooting angle are constant and stable. In other words, it can be imagined that the first lens and the light source jointly form a stable relative light source, and the light emitted by the relative light source is adjusted in the specific application process.

The light emitted by the relative light source is adjusted by a lens assembly composed of a convex lens and a concave lens. It should be noted that the convex lens and the concave lens have opposite light-emitting imaging characteristics. When the convex lens and concave lens are set to have the same radius R and the same refractive index n, if the distance between the convex lens and the relative light source, and the distance between the concave lens and the relative light source are respectively adjusted, it will appear that the change relationship of the two relative to the relative light source is consistent, that is, when the distance between the convex lens and the concave lens is adjusted, the disorganization of the output light and the lamination and blurring of the irradiated light spots caused by its inconsistent relationship with the light source will not appear anymore.

Obviously, when the distance between the convex lens and the concave lens is different, the illumination angle and the illumination range of the illumination system are different. When the lens assembly as above is used, no matter how to adjust the distance between the internal components, there will be no problem of unclear light spots. Therefore, the lens assembly can be freely adjusted according to the needs to meet different lighting requirements. The different optical paths and effects formed when the distance between the convex lens and the concave lens changes will be described later in detail.

It is conceivable that the number of the convex lens and the concave lens may be the same or different, that is to say, there are many combinations of convex and concave lenses that form the lens assembly. In this embodiment, a convex lens is selected to form a lens assembly with a concave lens.

The lens group of zoom lamp in the present application can also emit all the light emitted by the light source through the first lens, it is obvious that it can improve the utilization of the light source, that is, the lens group of zoom lamp in the present application can fully utilize the light emitted by the light source to achieve high light efficiency. In order to further improve the optical efficiency, the first lens of the present application can also collimate all the light rays emitted by the light source, that is, the first lens has a collimating effect, which can not only emitting all the light beams emitted by the light source, but also simultaneously shoot all the beams emitted from the light source into the lens assembly in parallel light.

In one embodiment of the present application, a total internal reflection lens is used as the first lens. When the light hit the total reflection surface of the total internal reflection lens, the total reflection surface can reflect all the incoming light without refraction, thus reducing the light loss. At the same time, the total internal reflection lens is designed in such a way that the curvature of the total internal reflection surface and the exit surface and incident surface of the total internal reflection surface meet the requirements that when the light is incident from the incident surface and is reflected by the total internal reflection surface, and then emitted through the exit surface, the light will exit in parallel. The total internal reflection lens in this embodiment adopts an axisymmetric design, and the lens group of zoom lamp in the present application will be described in detail below with reference to FIG 2, 3(a)-3(b).

As shown in FIG. 2, the lens group of zoom lamp includes a total internal reflection lens 1 having an axisymmetric design, and a lens assembly 2 composed of a convex lens 21 and a concave lens 22 having the same refractive index and radius. The total internal reflection lens 1 has a cup-shaped structure, and a groove 11 for accommodating the light source 3 is formed at a central portion of the light incident side. The groove 11 has a side incident surface 111, a central incident surface 112, and a total internal reflection surface 12 of the total internal reflection lens 1 is formed on the side surface and connected to the side incident surface 111. The exit surface 13 of the total internal reflection lens 1 is formed on the opposite side of the incident side and is connected to the total internal reflection surface 12.

As shown in FIG. 3(a)-3(d), the light-emitting surface of the light source 3 faces the central incident surface 112. In order to realize that the total internal reflection surface 1 can absorb all the light emitted by the light source 3, the backlight surface of the light source 3 is flush with the open end of the groove 11, and at the same time, the light source 3 is located on the symmetry axis of the total internal reflection lens 1, and the total internal reflection surface 12 is formed with positive curvature along the direction in which the light is coming out. In this embodiment, the total internal reflection surface 12 is designed such that when the light enters the total internal reflection surface 12 from the side incident surface 111, the light reflected by the total internal reflection surface 12 emits to the exit surface 13 in parallel and is emitted out from the exit surface 13 in parallel. Therefore, the exit surface 13 is designed to be a plane accordingly, and the central incident plane 112 is a convex lens plane. The light of the light source is incident on the convex lens surface, and is also going to the exit surface 13 in parallel and then horizontally emitted. Therefore, it can be concluded that the light source 3 is located at the focal point of the convex lens surface. The total internal reflection lens 1 is designed with collimation function. The horizontally emitted light can be utilized more efficiently than the scattered light, therefore the design again ensures the light is fully used. At this point, it can be equivalent to that, the relative light source formed by the light source 3 and the total internal reflection lens 1 emits parallel light to the lens assembly. At the same time, it should be noted that the light source 3 may also be located inside the groove 11, and the focal point of the convex lens surface is located inside the groove, correspondingly, the curvature of the side incident surface and the curvature of the total internal reflection surface meet the requirements that the light rays of the light source is incident from the side incident surface, and the reflected light reflected by the total internal reflection surface is parallel light, and also can realize the emitted light is parallel light when the exit surface is a plane, and at this time, since the light source 3 is located in the groove, all the light emitted by the light source 3 is totally reflected, and it will not be expanded one by one here.

Continue to see FIG. 2, the convex lens 21 in the lens assembly 2 is a plano-convex lens, the concave lens 22 is a plano-concave lens, and the plano-convex lens is located between the total internal reflection lens 1 and the plano-concave lens, and the convex surface of the plano-convex lens coincides with the concave surface of the plano-concave lens, thereby corresponding to the formed optical path effect corresponds to FIG. 3(a).

The effect of different optical paths formed by different distances between the convex lens and the concave lens will be described below. When the convex surface of the plano-convex lens coincides with the concave surface of the plano-concave lens, since both have the same radius and refractive index, when the two are coincident, it is equivalent to forming a slab lens, and when the parallel light is incident from the slab lens and then re-emitted, the direction of light propagation does not shift, so that it is still coming out at a parallel angle, as shown in Fig. 3(a), at this time, the luminous angle formed is the smallest, that is, the formation of a small angle of light.

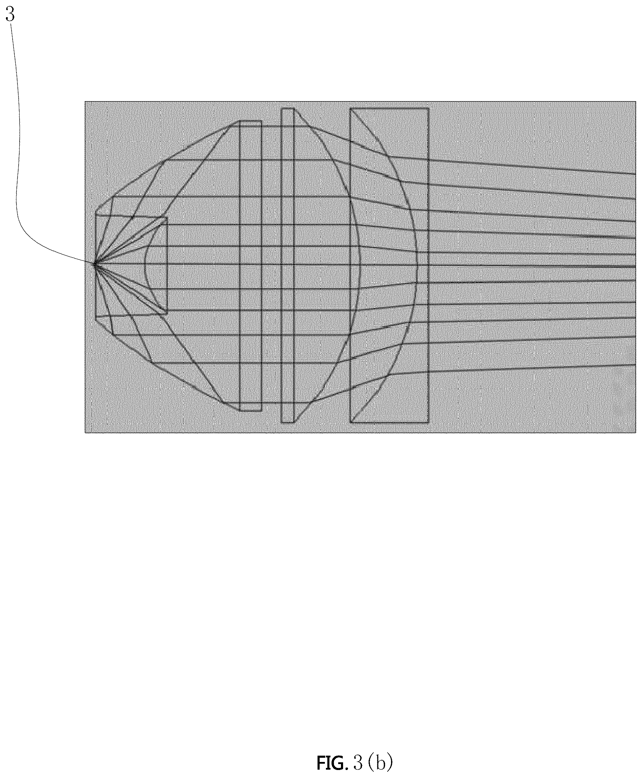

When the distance between the concave lens and the convex lens increases, the illumination angle of the entire illumination system also gradually increases. Assuming that the radius of the convex lens is R and the refractive index is n, the focal distance of the plano-convex lens is f=R/(n-1). When the plano-concave lens is away from the plano-convex lens but within the focal distance f of the plano-convex lens, the light will shift somewhat, as shown in Fig. 3(b), at this time, relative to fig.3 (a), the light angle projected through the plano-concave lens shows a certain outward deviation.

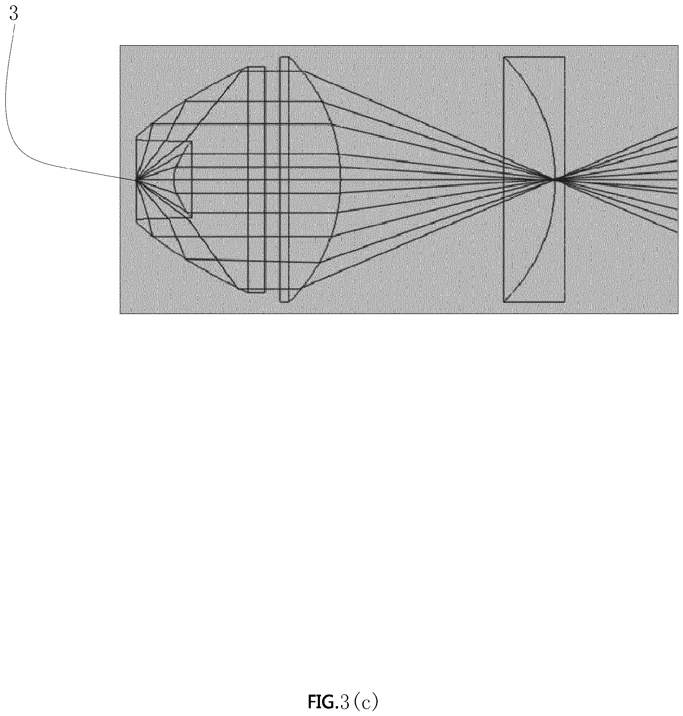

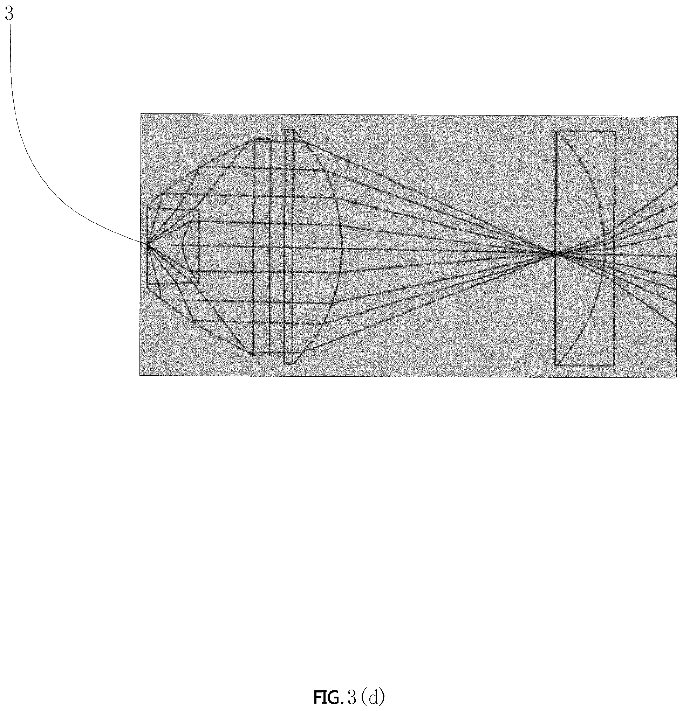

When the plano-convex lens continues to move, at the focal distance of the plano-concave lens, and outside the focal distance of the plano-concave lens, corresponding to the effect diagrams of fig. 3(c) and 3(d), respectively, it can be seen that when the plano-convex lens is at the position shown in Fig 3(d), the emitting angle at this time is the largest, and the range of illumination is also the largest. Therefore, it is conceivable that users can select the distance between the convex lens and the concave lens according to their own needs to form the desired light effect.

It should be noted that, in this embodiment, only the moving concave lens is taken as an example. However, in actual operation, the convex lens and the concave lens can be simultaneously moved as needed, thereby satisfying more light efficiency requirements, and details are not described herein again.

The above disclosure has been described by way of example and in terms of exemplary embodiment, and it is to be understood that the disclosure is not limited thereto. Rather, any modifications, equivalent alternatives or improvement etc. within the spirit of the invention are encompassed within the scope of the invention as set forth in the appended claims.

## Claims

1. A zoom lamp lens group, **characterized in that**:
the zoom lamp lens group includes a first lens with a fixed distance from the light source and capable of emitting all light rays of the light source, and a lens assembly located on a light exiting side of the first lens;
the lens assembly includes at least one concave lens and at least one convex lens located between the first lens and the concave lens;
the convex lens has the same radius and refractive index as the concave lens, and the convex surface of the convex lens is disposed opposite to the concave surface of the concave lens, and the distance between the convex lens and the concave lens is adjustable to obtain different illumination angles.

2. The zoom lamp lens group as claimed in claim 1, wherein the first lens is a lens capable of collimating all the light rays emitted from the light source.

3. The zoom lamp lens group as claimed in claim 1, wherein the first lens is a total internal reflection lens.

4. The zoom lamp lens group as claimed in claim 2, wherein the first lens is a total internal reflection lens capable of collimating all of the light rays emitted from the light source.

5. The zoom lamp lens group as claimed in claim 4, wherein the total internal reflection lens includes a groove formed at a central portion of the light incident side of the total internal reflection lens for accommodating the light source, the groove having a side incident surface and a central incident surface,
a total internal reflection surface formed on the side surface and connected to the side incident surface,
and an exit surface formed on the opposite side of the light incident side and connected to the total internal reflection surface;
the curvatures of the total internal reflection surface and the exit surface and the incident surfaces meet the requirements that all the light rays of the light source are incident from the incident surface, reflected by the total internal reflection surface, and then emitted out through the exit surface in parallel.

6. The zoom lamp lens group as claimed in claim 5, wherein the total internal reflection lens is axisymmetric formed;
the central incident surface is a convex lens surface, the focal point of the convex lens surface is located in the groove, and the light source is located at the focal point;
the side incident surface and the total internal reflection surface meet the requirements that the light rays of the light source is incident from the side incident surface, and the reflected light reflected by the total internal reflection surface is horizontally emitted toward the exit surface, and the exit surface is a plane correspondingly.

7. The zoom lamp lens group as claimed in claim 5, wherein the total internal reflection lens is axisymmetric formed;
the central incident surface is a convex lens surface, the focal point of the convex lens surface coincides with an intersection formed by the intersection of the open end of the groove and the symmetry axis of the total internal reflection lens, and the light source is located at the focal point and the backlight surface of the light source and the open end of the groove is flush;
the side incident surface and the total internal reflection surface meet the requirements that the light rays of the light source is incident from the side incident surface, and the reflected light reflected by the total internal reflection surface is horizontally emitted toward the exit surface, and the exit surface is a plane correspondingly.

8. The zoom lamp lens group as claimed in claim 1, wherein the distance between the concave lens and the convex lens has the following choices: the concave surface and the convex surface coincide, the concave lens is located within the focal distance of the convex lens, the concave lens is located at the focal distance of the convex lens, and the concave lens is located outside the focal distance of the convex lens.

9. The zoom lamp lens group as claimed in any one of claim 1 to claim 8, wherein the zoom lamp lens group can be applied in the lighting system to process the light from the light source in the lighting system.
